# EUROPEAN PATENT SPECIFICATION

(11) **EP 2 935 453 B1**
(45) Date of publication and mention of the grant of the patent: **24.07.2019**
(21) Application number: 13814301.1
(22) Date of filing: 04.12.2013
(51) Int. Cl.: C08L 23/04, C08L 71/02

(54) **POLYOLEFIN-BASED COMPOUND FOR CABLE JACKET WITH REDUCED SHRINKAGE AND ENHANCED PROCESSABILITY**
POLYOLEFINBASIERTE ZUSAMMENSETZUNG FÜR EINE KABELBUCHSE MIT REDUZIERTER SCHRUMPFUNG UND VERBESSERTER VERARBEITBARKEIT
COMPOSÉ À BASE DE POLYOLÉFINE DESTINÉ À UNE GAINE DE CÂBLE PRÉSENTANT UN RETRAIT RÉDUIT ET UNE APTITUDE AMÉLIORÉE À LA TRANSFORMATION

(30) Priority: 21.12.2012 US 201261740669 P
(43) Date of publication of application: 28.10.2015
(73) Proprietor: Dow Global Technologies LLC, Midland, MI 48674 (US)
(72) Inventor: LEE, Day-chyuan, Doylestown, PA 18901 (US)
(74) Representative: Boult Wade Tennant LLP
(86) International application number: PCT/US2013/072969
(87) International publication number: WO 2014/099360

(56) References cited:
- US-A1- 2004 254 268
- US-A1- 2007 009 691

## Description

### FIELD OF THE INVENTION

In one aspect, this invention relates to compositions composed of an extrudable blend of an ethylene-based thermoplastic polymer comprising high density polyethylene (HDPE) blended with a modifier component, while in another aspect, the invention relates to the use of these compositions to make articles such as wire or cable coverings. In another aspect, the invention relates to methods of reducing excess fiber length and post-extrusion shrinkage of articles such as a cable jacket on a fiber optical cable.

### BACKGROUND OF THE INVENTION

The main function of fiber optical cables is transmitting data signals at high rates and long distances. Optical fibers are typically incorporated into a protective tube such as a buffer tube that protects the fibers from mechanical damage and/or adverse environmental conditions such as moisture exposure. Optical cables are generally manufactured using high modulus materials to provide the cable and its components with good crush strength. An outer jacketing material, which is typically composed of polyethylene, surrounds the components of the cable.

An important performance parameter for extruded optical cable components is post-extrusion shrinkage of the cable jacketing material, which results in "excess fiber length" (EFL) for the contained optical fibers whereby the fibers extend beyond the ends of the jacketing material. Such shrinkage of the jacketing material leads to stresses on the optic fibers causing undesirable and/or unacceptable signal attenuation in the data cable.

To minimize signal loss, it is critical to reduce shrinkage, and particularly field shrinkage, i.e., cyclic temperature shrinkage, of the jacketing material. High density polyethylene (HDPE) is a cost effective jacketing material but is prone to excessive field shrinkage due to its semi-crystalline nature. Attempts have been made to reduce shrinkage of cable jackets fabricated from HDPE by optimizing HDPE chain architecture (e.g., chain length, branching, etc.) and through bimodal approaches. However, with HDPE chain architecture near optimal, further performance improvement has been generally limited to fine tuning of the polyethylene chain structure, requiring reactor and reaction engineering support resulting in longer turnaround times and high costs.

From an industry standpoint, it is important to further reduce HDPE field shrinkage for future developments and improvements of optical cable components including jacketing to minimize undesirable signal attenuation of data cable applications. It would be desirable to provide a material based on HDPE with improved extrusion processability that can be used in fabricating extruded optical cable components including cable jackets having reduced (low) shrinkage and EFL for use in fiber optic cables.

### SUMMARY OF THE INVENTION

In one embodiment, the invention is a composition comprising, as a blend:
A. an ethylene-based thermoplastic polymer comprising high density polyethylene (HDPE);
B. a modifier component in an amount of from 0.1 to 2 wt% based on the total weight of the composition, which is effective to reduce shrinkage of the composition after extrusion, wherein the modifier component is selected from the group consisting of polyethylene glycol (PEG) having a Mw of from 1,000 to 100,000, polypropylene glycol (PPG) having a Mw of from 1,000 to 100,000, diethylene glycol (DEG), polar polyethylene copolymer, and combinations thereof;
C. optionally, carbon black; and D. optionally, one or more additives
   wherein the cyclic temperature shrinkage of the extruded composition (as measured according to IEC 60811-503) is at least 1% less than said extruded composition made without the modifier component.

In embodiments, the composition comprises 20 to 99.9 wt % of the ethylene-based thermoplastic polymer and 0.1 to 2 wt% of the modifier component, with the weight percentages (wt%) based upon the total weight of the composition. In embodiments, the composition comprises greater than zero (> 0) to 3 wt% of a non-conductive carbon black.

In embodiments, the cyclic temperature shrinkage of the extruded composition is 1 to 20% less than an extruded composition having the same formulation but without the modifier component. In embodiments, the composition has a viscosity of at least 1% to up to 15% lower than a composition having the same formulation but made without the modifier component.

In embodiments, the ethylene-based thermoplastic polymer comprises a bimodal HDPE. In embodiments, the ethylene-based thermoplastic polymer comprises a mixture of a bimodal HDPE with a unimodal polyethylene (PE), e.g., unimodal HDPE, a unimodal medium density polyethylene (MDPE), a unimodal linear low-density polyethylene (LLDPE) and/or a unimodal low-density polyethylene (LDPE).

In embodiments, the modifier component is a polyethylene glycol (PEG) having a Mw of from 1,000 to 100,000.

In embodiments, the composition consists essentially of a blend of the ethylene-based thermoplastic polymer, the modifier component, optionally carbon black, and optionally one or more additives.

In another aspect, the invention provides a cable jacket on a fiber optical cable, the jacket made from the composition as disclosed herein.

In yet another aspect, the invention provides a method of reducing excess fiber length in a cable jacket on a wire or cable, for example, a fiber optical cable, the method comprising extruding the composition as disclosed herein onto the wire or cable to form the jacket.

### DETAILED DESCRIPTION OF THE PREFERRED EMBODIMENT

### Definitions

Unless stated to the contrary, implicit from the context, or customary in the art, all parts and percents are based on weight.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, weight percentages, *etc.,* is from 100 to 1,000, then the intent is that all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 0.9, 1.1, *etc.*), one unit is considered to be 0.0001, 0.001, 0.01 or
0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the component amounts of the composition and various process parameters.

"Wire" and like terms mean a single strand of conductive metal, e.g., copper or aluminum, or a single strand of optical fiber.

"Cable", "communication cable", "power cable" and like terms mean at least one wire or optical fiber within a sheath, e.g., an insulation covering or a protective outer jacket. Typically, a cable is two or more wires or optical fibers bound together, typically in a common insulation covering and/or protective jacket. The individual wires or fibers inside the sheath may be bare, covered or insulated. Combination cables may contain both electrical wires and optical fibers. Electrical insulation applications are generally divided into low voltage insulation which are those less than 1kV (one thousand volts), medium voltage insulation which ranges from 1kV k to 30kV, high voltage insulation which ranges from 30kV to 150kV, and extra high voltage insulation which is for applications above 150kV (as defined by the IEC, the International Electrotechnical Commission). Typical cable designs are illustrated in USP 5,246,783, USP 6,496,629, USP 6,714,707, and US 2006/0045439.

"Composition" and like terms mean a mixture or blend of two or more components.

"Interpolymer" and like terms mean a polymer prepared by the polymerization of at least two different types of monomers. The generic term interpolymer thus includes copolymers (employed to refer to polymers prepared from two different types of monomers), and polymers prepared from more than two different types of monomers, e.g., terpolymers, tetrapolymers, etc..

"Comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

Unless expressly specified otherwise, the term "density" is determined in accordance with ASTM D-792.

Unless expressly specified otherwise, the term "melt index- I₂" means the melt index, as determined in accordance with ASTM D1238 under a load of 2.16 kilograms (kg) and at a temperature of 190°C. The term "melt index- I₁₀" means the melt index, as determined in accordance with ASTM D1238 under a load of 10 kilograms (kg) and at a temperature of 190°C. The term "melt index- I₂₁" means the melt index, as determined in accordance with ASTM D1238 under a load of 21.6 kilograms (kg) and at a temperature of 190°C.

The term "shrinkage" as used herein, refers to cyclic temperature (or field) shrinkage of a jacketing or other sheath material, as measured according to IEC 60811-503 (shrinkage test for sheaths).

### Overview

This invention is directed to extruded jacketing material for wire and cable, including optical cables, fabricated from an extrudable ethylene-based thermoplastic polymer comprising a bimodal high density polyethylene (HDPE) blended with a modifier component, and optionally with carbon black and optional additives, the components present in amounts effective to provide enhanced processability and reduced (low) shrinkage of the extruded jacketing material or other component produced from the composition.

In embodiments, the cyclic temperature shrinkage of the extruded composition (as measured according to IEC 60811-503) is at least 1% less, typically from 1 to 20% less, more typically from 2 to 13 % less, more typically from 3 to 6% less, than the extruded ethylene-based thermoplastic polymer composition having the same formulation but without the modifier component. The incorporation of the described modifying component(s) in combination with the ethylene-based thermoplastic polymer comprising an HDPE polymer, minimizes subsequent cyclic temperature shrinkage of the extruded material as compared to the same polymer formulation without the modifying component.

The compositions of the invention also provide a lowered viscosity for enhanced processability and extrusion. In addition, the compositions provide an enhanced environmental stress crack resistance (ESCR).

### Ethylene-based thermoplastic polymer

The polymer blend composition includes an ethylene-based thermoplastic polymer composed of a high density polyethylene (HDPE) polymer. As used herein, the terms "high density polyethylene" polymer and "HDPE" polymer refer to a homopolymer or copolymer of ethylene having a density of equal or greater than 0.941 g/cm³. The terms "medium density polyethylene" polymer and "MDPE" polymer refer to a copolymer of ethylene having a density from 0.926 to 0.940 g/cm³. The terms "linear low density polyethylene" polymer and "LLDPE" polymer refer to a copolymer of ethylene having a density from 0.915 to 0.925 g/cm³. The terms "low density polyethylene" polymer and "LDPE" polymer refer to a copolymer of ethylene having a density from 0.915 to 0.925 g/cm³.

The ethylene-based thermoplastic polymer typically has a density of from 0.940 to 0.980, more typically from 0.941 to 0.980, more typically from 0.945 to 0.975, and more typically from 0.950 to 0.970, g/cm³ as measured in accordance with ASTM D-792. In some embodiments, the ethylene-based thermoplastic polymer is a copolymer of ethylene having a density of from 0.940 to 0.970 g/cm³.

In general, the ethylene-based thermoplastic polymer has a melt index (MI, I₂) of from 0.01 to 45, more typically from 0.1 to 10, and more typically from 0.15 to 5, and more typically from 0.5 to 2.5, g/10 minutes, as measured in accordance with ASTM D-1238, Condition 190°C/2.16 kg.

The ethylene-based thermoplastic polymer typically has a melt flow rate (MFR, I₁₀/I₂) of less than or equal to 30, more typically less than 25, and typically from 7 to 25, more typically from 10 to 22.

In embodiments, the ethylene-based thermoplastic polymer has a weight average molecular weight (Mw) (measured by GPC) of from 81,000 to 160,000, more typically from 90,000 to 120,000, and a number average molecular weight (Mn) (measured by GPC) of from 4,400 to 54,000, more typically from 5,000 to 32,000. In embodiments, the Mw/Mn ratio or molecular weight distribution (MWD) ranges from 3 to 18, more typically from 5 to 16.

The ethylene-based thermoplastic polymer comprises at least 50, preferably at least 60 and more preferably at least 80, mole percent (mol%) of units derived from ethylene monomer units. The other units of the ethylenic interpolymer are typically derived from one or more α-olefins. The α-olefin is preferably a C₃₋₂₀ linear, branched or cyclic α-olefin. Examples of C₃₋₂₀ α-olefins include propene, 1-butene, 4-methyl-1-pentene, 1-hexene, 1-octene, 1-decene, 1-dodecene, 1-tetradecene, 1-hexadecene, and 1-octadecene. The α-olefins also can contain a cyclic structure such as cyclohexane or cyclopentane, resulting in an α-olefin such as 3-cyclohexyl-1-propene (allyl cyclohexane) and vinyl cyclohexane. Although not α-olefins in the classical sense of the term, for purposes of this invention certain cyclic olefins, such as norbornene and related olefins, particularly 5-ethylidene-2-norbornene, are α-olefins and can be used in place of some or all of the α-olefins described above. Illustrative ethylenic interpolymers include copolymers of ethylene/propylene, ethylene/butene, ethylene/1-hexene, ethylene/1-octene, and the like. Illustrative ethylenic terpolymers include ethylene/propylene/1-octene, ethylene/propylene-/butene, ethylene/butene/1-octene, ethylene/propylene/diene monomer (EPDM) and ethylene/butene/styrene.

The ethylene-based thermoplastic polymers used in the practice of this invention are non-functionalized polymers, i.e., they do not contain functional groups, such as hydroxyl, amine, amide, etc. As such polymers like ethylene vinyl acetate, ethylene methyl or ethyl acrylate and the like, are not ethylene-based thermoplastic polymers within the context of this invention.

The HDPE polymers and MDPE, LLDPE and LDPE polymers, used in the invention are well known in the literature and can be prepared by known techniques.

In general, the amount of the ethylene-based thermoplastic polymer present in the composition is from 20 to 99.9 wt %, more typically from 40, more typically from 60, more typically from 80, more typically from 90, to 99.9, wt%, based on the total weight of the composition. All individual values and subranges from 20 to 99.9 wt% are included and disclosed herein, for example from 94 to 99.9 wt%.

### Unimodal ethylene-based thermoplastic polymer

An ethylene-based thermoplastic polymer can be a unimodal high density polyethylene (HDPE) polymer. The terms "unimodal HDPE," "unimodal MDPE," "unimodal LLDPE" and "unimodal LDPE" as used herein refer to a polyethylene (PE) polymer having a molecular weight distribution (MWD) (measured by gel permeation chromatography (GPC)) that does not substantially exhibit multiple component polymers, that is, no humps, shoulders or tails exist or are substantially discernible in the GPC curve, and the degree of separation (DOS) is zero or substantially close to zero.

Unimodal PE polymers are produced under one set of polymerization conditions, and can be produced by a conventional single stage polymerization (single reactor) process, such as a solution, slurry or gas-phase process, using a suitable catalyst such as a Ziegler-Natta or Phillips type catalyst or a single site metallocene catalyst, as described, for example, in USP 5,324,800. Unimodal PE resins are well known and commercially available in various grades. Nonlimiting examples of unimodal PEs include those sold under the tradenames DGDK-3364NT (a HDPE) and DHDA-6548BK (a MDPE), available from The Dow Chemical Company.

### Multimodal HDPE

The ethylene-based thermoplastic polymer is a multimodal (*i.e.,* bimodal) HDPE. The term "multimodal," as used herein, means that the MWD in a GPC curve exhibits two or more component polymers, wherein one component polymer may even exist as a hump, shoulder or tail relative to the MWD of the component polymer. A multimodal HDPE polymer is prepared from one, two or more different catalysts and/or under two or more different polymerization conditions. A multimodal HDPE polymer comprises at least a lower molecular weight component (LMW) and a higher molecular weight (HMW) component. Each component is prepared with a different catalyst and/or under different polymerization conditions. The prefix "multi" relates to the number of different polymer components present in the polymer. The multimodality (or bimodality) of the HDPE polymer can be determined according to known methods. The multimodal HDPE is a bimodal HDPE.

In embodiments, the HMW component has a density of from 0.90, more typically from 0.915, to 0.935, more typically to 0.94, g/cm³, and a melt index (I₂₁) of 30 or less, more typically 10 or less, g/10 min. The HMW HDPE polymer component of a bimodal HDPE polymer is typically present in an amount of 10 to 90, more typically 30 to 70, wt%.

In embodiments, the LMW component has a density of from 0.940, more typically from 0.950, to 0.975, more typically to 0.980, g/cm³, and a melt index (I₂) of 50 or more, more typically 80 or more, g/10 min. The LMW HDPE polymer component is typically present in an amount of 10 to 90, more typically 30 to 70, wt%.

Multimodal HDPE can be produced using conventional polymerization processes, such as a solution, slurry or gas-phase process, using a suitable catalyst such as a Ziegler-Natta or Phillips type catalyst or a single site metallocene catalyst. A nonlimiting example of a multimodal HDPE is set forth in EP 2016128(B1), USP 7,714,072 and US 2009/0068429. A nonlimiting example of suitable multimodal HDPE is sold under the tradename DGDK 6862NT, available from The Dow Chemical Company, Midland, Michigan.

In embodiments, the ethylene-based thermoplastic polymer can be a mixture of a bimodal HDPE with one or more other bimodal PEs and/or one or more unimodal PEs, e.g., HDPE, MDPE, LLDPE and/or LDPE.

### Modifier Component

The ethylene-based thermoplastic polymer is blended with a modifier component of a select group of compounds as described herein. The modifier component functions in combination with the ethylene-based thermoplastic polymer to modify the polymer composition to reduce post-extrusion shrinkage of the composition, and particularly cyclic temperature shrinkage (as measured according to IEC 60811-503).

In embodiments, the ethylene-based thermoplastic polymer is combined with one or more of the following modifier components: polyethylene glycol (PEG) and/or polypropylene glycol (PPG) having a Mw of from 1,000 to 100,000, more typically from 5,000 to 50,000, diethylene glycol (DEG), and, one or more polar polyethylene copolymers.

Nonlimiting examples of polyethylene glycol (PEG) include those sold under the tradenames Polyglykol® available from Clariant Corporation, Carbowax™ available from The Dow Chemical Co., and GoLYTELY, GlycoLax, Fortrans, TriLyte, Colyte, Halflytely, Macrogel, MiraLAX and MoviPrep.

A nonlimiting example of a polypropylene glycol (PPG) is sold under the tradename Polyglycol P-4000E, available from The Dow Chemical Co.

A nonlimiting example of a diethylene glycol (DEG) is sold under the tradename Diethylene Glycol (high purity), available from The Dow Chemical Co.

A polyethylene with polar groups (i.e., "polar polyethylene copolymers") can be produced by copolymerization of ethylene monomers with polar comonomers or by grafting a polar monomer onto the polyethylene according to conventional methods. Examples of polar comonomers include C₁ to C₆ alkyl (meth)acrylates, (meth)acrylic acids and vinyl acetate. In embodiments, the polar polyethylene copolymer is an ethylene/(meth)acrylate, ethylene/acetate, ethylene/hydroxyethylmethacrylate (EHEMA), ethylene/methylacrylate (EMA), and/or ethylene/ethyleacrylate (EEA) copolymer.

The amount of the modifier component in the composition is typically from 0.1 to 2, more typically from 0.3, more typically from 0.4, more typically from 0.5, to 2, wt%, based on the total weight of the composition. All individual values and subranges from 0.1 to 2 wt% are included and disclosed herein, for example from 0.5 to 2 wt%.

### Carbon Black

The composition can optionally contain a non-conductive carbon black commonly used in cable jacket.

The carbon black component can be compounded with the ethylene-based thermoplastic polymer and modifier component, either neat or as part of a pre-mixed masterbatch.

In embodiments, the modifier compound is included in the composition as a coating on a carbon black material. In embodiments, aggregates of the carbon black are coated with the modifier component. The modifier component can be coated onto the carbon black using conventional methods, as described, for example, in USP 5,725.650, USP 5,747.563 and USP 6,124,395.

In embodiments, wherein included, the amount of a carbon black in the composition is at greater than zero (>0), typically from 1, more typically from 2, to 3, wt%, based on the total weight of the composition. All individual values and subranges from >0 to 3 wt% are included and disclosed herein, for example from 2 to 3 wt%.

In embodiments, the composition can optionally include a conductive carbon black at a high level for semiconductive applications.

Non-limiting examples of conventional carbon blacks include the grades described by ASTM N550, N472, N351, N110 and N660, Ketjen blacks, furnace blacks and acetylene blacks. Other non-limiting examples of suitable carbon blacks include those sold under the tradenames BLACK PEARLS®,CSX®, ELFTEX®, MOGUL®, MONARCH®, REGAL® and VULCAN®, available from Cabot.

### Additives

The composition can optionally contain one or more additives, which are generally added in conventional amounts, either neat or as part of a masterbatch.

Additives include but not limited to flame retardants, processing aids, nucleating agents, foaming agents, crosslinking agents, fillers, pigments or colorants, coupling agents, antioxidants, ultraviolet stabilizers (including UV absorbers), tackifiers, scorch inhibitors, antistatic agents, slip agents, plasticizers, lubricants, viscosity control agents, anti-blocking agents, surfactants, extender oils, acid scavengers, metal deactivators, vulcanizing agents, and the like.

Nonlimiting examples of flame retardants include, but are not limited to, aluminum hydroxide and magnesium hydroxide.

Nonlimiting examples of processing aids include, but are not limited to, fatty amides such as stearamide, oleamide, erucamide, or N,N'-ethylene bis-stearamide; polyethylene wax; oxidized polyethylene wax; polymers of ethylene oxide; copolymers of ethylene oxide and propylene oxide; vegetable waxes; petroleum waxes; non-ionic surfactants; silicone fluids; polysiloxanes; and fluoroelastomers such as Viton® available from Dupon Performance Elastomers LLC, or Dynamar™ available from Dyneon LLC.

A nonlimiting example of a nucleating agent include Hyperform® HPN-20E (1,2-cyclohexanedicarboxylic acid calcium salt with zinc stearate) from Milliken Chemicals, Spartanburg, S.C.

Nonlimiting examples of fillers include, but are not limited to, various flame retardants, clays, precipitated silica and silicates, fumed silica, metal sulfides and sulfates such as molybdenum disulfide and barium sulfate, metal borates such as barium borate and zinc borate, metal anhydrides such as aluminum anhydride, ground minerals, and elastomeric polymers such as EPDM and EPR. If present, fillers are generally added in conventional amounts, e.g., from 5 wt% or less to 50 or more wt% based on the weight of the composition.

### Compounding

The polymer composition of the invention can be produced by any suitable method. For example, the modifier component, optionally carbon black and any additives (e.g., fillers, etc.) can be added to a melt containing the ethylene-based thermoplastic polymer. Such compounding of the components can be performed by blending, for example, using an internal batch mixer such as a Banbury or Bolling internal mixer. Alternatively, continuous single or twin screw mixers can be used, such as a Farrel continuous mixer, a Werner and Pfleiderer twin screw mixer, or a Buss kneading continuous extruder.

The modifier component, carbon black and/or the additives can be introduced into the ethylene-based thermoplastic polymer composition alone (neat) or as a pre-mixed masterbatch. Such masterbatches are commonly formed by dispersing the modifier, carbon black and/or additives into an inert plastic resin, e.g., polyethylene. Masterbatches are conveniently formed by melt compounding methods.

In embodiments, the ethylene-based thermoplastic polymer is compounded with the modifier component and optional additives, without carbon black. In other embodiments, the ethylene-based thermoplastic polymer, modifier component and carbon black (neat or as a pre-mixed master batch) are compounded, optionally with one or more additives. In other embodiments, the ethylene-based thermoplastic polymer is compounded with carbon black having a surface treatment of the modifier component, and optional additives, with optional additional amounts of the modifier component added either neat or as a premixed masterbatch. In embodiments, the modifier component is introduced neat or in a pre-mixed masterbatch and/or as a coating on a carbon black material.

In embodiments, inclusion of the modifier component reduces cyclic temperature shrinkage by at least 1% less, more typically by at least 3% less, more typically by at least 6% less, and typically up to 13% less, more typically up to 20% less, than the same ethylene-based thermoplastic polymer composition but made without the modifier component.

### Articles of Manufacture

In one embodiment, the composition of this invention can be applied to a cable as a sheath or insulation layer in known amounts and by known methods, for example, with the equipment and methods described, for example, in USP 5,246,783, USP 6,714,707, USP 6,496,629 and US 2006/0045439. Typically, the composition is prepared in an extruder equipped with a cable-coating die and after the components of the composition are formulated, the composition is extruded over the cable as the cable is drawn through the die.

Other articles of manufacture that can be prepared from the polymer compositions of this invention include fibers, ribbons, sheets, tapes, tubes, pipes, weather-stripping, seals, gaskets, hoses, foams, footwear bellows, bottles, and films. These articles can be manufactured using known equipment and techniques.

The invention is described more fully through the following examples. Unless otherwise noted, all parts and percentages are by weight.

### SPECIFIC EMBODIMENTS

### Example

### Materials

The following materials were used in the examples.

DFNA-4580 NT is a Unipol gas phase unimodal HDPE with a density of 0.945 g/cm³ and a melt index (MI, I₂) of 0.8 g/10 min (190°C/2.16 kg), available from The Dow Chemical Company.

DFNA-2065 is a Unipol gas phase unimodal LLDPE with a density of 0.920 g/cm³ and a melt index (MI, I₂) of 0.55 g/10 min (190°C/2.16 kg), available from The Dow Chemical Company.

DFNB-3580 NT is a Unipol gas phase unimodal MDPE with a density of 0.935 g/cm³ and a melt index (MI, I₂) of 0.6 g/10 min (190°C/2.16 kg), available from The Dow Chemical Company.

DGDA-6944 is a Unipol gas phase unimodal HDPE with a density of 0.965 g/cm³ and a melt index (MI, I₂) of 8.0 g/10 min (190°C/2.16 kg), available from The Dow Chemical Company.

DMDA-1250 NT is a Unipol gas phase bimodal HDPE with a density of 0.955 g/cm³ and a melt index (MI, I₂) of 1.5 g/10 min. (190°C/2.16 kg), available as CONTINUUM™ DMDA-1250 NT 7 from The Dow Chemical Company.

PEG 20,000 is a polyethylene glycol (PEG) with a molecular weight of 20,000, available commercially under the tradename Polyglykol® from Clariant Corporation, Charlotte, N.C.

DFNC-0037BK is a pelleted 45% carbon black masterbatch ("CBM") (particle size: 20 millimicrons (0.02 microns) average), available commercially from The Dow Chemical Company.

Blends of commercial unimodal and bimodal polyethylene (PE) with carbon black and optionally PEG-20000 as the modifier component as shown in Table 1, were compounded, extruded onto wire specimens (with the conductor removed), and tested for cyclic temperature shrinkage.

The composition blends were prepared by introducing the PE polymer(s), carbon black master batch (and PEG-20000 for Ex. 1 and 2) into a Brabender mixing bowl at 185°C, 50 RPM for 5 minutes. After mixing while still hot (about 150°C), the composition was compressed to a thickness of 7.5 mm between the platens of a compression mold. The material was then cut pellets. After pelleting, coated wire are then prepared by extruding the material through a 0.27 cm (0.105 inch) die onto 14 AWG wire to form a jacketing layer (0.06 to 0.07 cm (0.023 to 0.027 inch) thick). The wire samples with center conductor removed were then subjected to cyclic temperature shrinkage.

Cyclic temperature (or field) shrinkage was conducted to simulate the service conditions of the optical data cable. In sum, the wire specimen (with the conductor removed) was conditioned in an oven at a rate of 0.5°C per minute temperature ramp from 40°C to 100°C, held at 100°C for 60 minutes, and then the temperature was ramped back to 40°C at a rate of 0.5°C per minute, and held at 40°C for 20 minutes. The temperature cycle was repeated for five (5) cycles prior to the shrinkage measurement, which was conducted using a ruler (precision of 1.59 mm (1/16-inch (0.0625 inch)). The foregoing test method was consistent with IEC 60811-503 (shrinkage test for sheaths).

**Table 1**

| | **wt%** | | | | | | |
|---|---|---|---|---|---|---|---|
| | **CS1** | **CS2** | **EX. 1** | **CS3** | **CS3** | **EX. 2** | **CS4** |
| DFNA-4580 NT (unimodal HDPE) | 85.65 | --- | --- | --- | --- | --- | |
| DFNA-2065 NT (unimodal LLDPE) | 8.5 | --- | --- | --- | --- | --- | |
| DFNB-3580 NT (unimodal MDPE) | --- | 70.61 | 70.16 | --- | --- | --- | |
| DGDA-6944 NT (unimodal HDPE) | --- | 23.54 | 23.39 | --- | --- | --- | |
| DMDA-1250 NT (bimodal HDPE) | --- | --- | --- | 94.15 | 94.15 | 93.55 | |
| PEG 20,000 | --- | --- | 0.6 | --- | --- | 0.6 | |
| DFNC-0037BK (Carbon black MB) | 5.85 | 5.85 | 5.85 | 5.85 | 5.85 | 5.85 | |
| Total (wt%) | 100 | 100 | 100 | 100 | 100 | 100 | 100 |
| Cyclic Temp. Shrinkage | 2.38% | 2.27% | 2.21% | 1.90% | 1.87% | 1.76% | 2.60% |
| Shrinkage reduction over the Control (CS1) | 0% | -5% | -7% | -20% | -21% | -26% | 9% |
| Shrinkage reduction over same formulation without PEG | --- | --- | -3% | --- | --- | -6% | --- |
| Apparent Viscosity (Pa.s) | --- | 274 @ 520 sec-1; 191 @ 1015 sec-1 | 251 @ 520 sec-1; 173 @ 1015 sec-1 | --- | 214 @ 590 sec -1; 137 @ 1155 sec-1 | 196 @ 590 sec-1; 128 @ 1155 sec-1 | --- |
| Viscosity reduction (%) over same formulation without PEG | --- | --- | -8% @ 520 sec-1; -9% @ 1015 sec-1 | --- | --- | -8% @ 590 sec-1; -6% @ 1155 sec-1 | --- |

CS1 made with a blend of DFNA-4580NT and DFNA-2065 unimodal HDPE and LLDPE polymers and carbon black master batch, served as the control.

CS2 made with a blend of DFNB-3580 NT and DGDA-6944 unimodal MDPE and HDPE polymers and carbon black master batch showed a total shrinkage reduction of 5% compared to the Control (CS1) blend. These results demonstrate an improved unimodal PE blend for CS2 having reduced cyclic temperature shrinkage compared to the Control (CS1) blend.

The results from Example 1 demonstrate that addition of 0.6 wt% PEG to a unimodal HDPE blend provided a 3% reduction of cyclic temperature shrinkage compared to the same formulation but made without the PEG component (CS2). Example 1 also demonstrates a total shrinkage reduction of 7% compared to the Control (CS1) blend.

The results from Example 2 demonstrate that with a bimodal HDPE/CMB composition, the addition of 0.6 wt% PEG resulted in a 6% reduction of cyclic temperature shrinkage compared to the same formulation without the PEG (CS3). Example 2 also demonstrates a total shrinkage reduction of 26% when a bimodal HDPE feedstock was utilized, compared to the unimodal HDPE Control (CS1).

CS4 was prepared with is a black bimodal high density polyethylene (HDPE) compound produced by SCG chemicals. The results from CS4 showed a cyclic temperature shrinkage that was 9% higher than the Control (CS1), whereas the bimodal HDPE samples (e.g., CS3) had a 20% lower shrinkage than the Control (CS1).

The cyclic temperature shrinkage measurements were analyzed to confirm the statistical significance. The confidence level that cyclic temperature shrinkage of the bimodal sample CS4 was significantly different than the unimodal control sample CS1 was 99%. The confidence level that the cyclic shrinkage of Example 2 (bimodal resin with 0.6% PEG) was significantly different than that of CS3 (same bimodal formulation without PEG) was 60%. The confidence level that the cyclic shrinkage of Example 1 (unimodal resin with 0.6% PEG and 'improved' unimodal HDPE blend of CS2) was significantly different than that of CS1 (unimodal formulation without PEG) was 95%. The confidence level that the cyclic shrinkage of CS2 ('improved' unimodal HDPE resin blend without PEG) was significantly different than that of CS1 (unimodal formulation without PEG) was 60%.

The results show that the resin compositions of the invention provide a reduction in cyclic thermal shrinkage of an extruded material (e.g., jacketing material) compared to an extruded material made from a resin of the same formulation but without the modifier component (e.g., PEG).

### Viscosity reduction.

In addition to the reduced shrinkage of the extruded material (e.g., jacketing material), the addition of the modifier component (e.g., PEG) lowers the viscosity of the composition compared to the same resin formulation made without the modifier component.
Example 1 (unimodal HDPE resin blend with 0.6% PEG) had a lower apparent viscosity ranging from 251 to 173 Pa▪s over a shear rate ranging from 520 to 1015 sec-1, compared to CS2 (same unimodal HDPE formulation without PEG) which had an apparent viscosity ranging from 274 to 191 Pa▪s over the same shear rate range.
Example 2 (bimodal resin with 0.6% PEG) had a lower apparent viscosity ranging from 196 to 128 Pa▪s over a shear rate ranging from 590 to 1155 sec-1, compared to CS3 (same bimodal formulation without PEG) which had an apparent viscosity ranging from 214 to 137 Pa▪s over the same shear rate range.

## Claims

1. A composition comprising, as a blend:
A. an ethylene-based thermoplastic polymer comprising a bimodal high density polyethylene (HDPE);
B. a modifier component in an amount of from 0.1 to 2 wt% based on the total weight of the composition, which is effective to reduce shrinkage of the composition after extrusion, wherein the modifier component is selected from the group consisting of polyethylene glycol (PEG) having a Mw of from 1,000 to 100,000, polypropylene glycol (PPG) having a Mw of from 1,000 to 100,000, diethylene glycol (DEG), polar polyethylene copolymer and combinations thereof; and
C. optionally, carbon black; and
D. optionally, one or more additives.

2. The composition of claim 1, as an extruded composition, wherein the cyclic temperature shrinkage of the extruded composition (as measured according to IEC 60811-503) is at least 1% less than said extruded composition having the same formulation but made without the modifier component.

3. The composition of claim 1, comprising:
A. 20 to 99.9 wt % of the ethylene-based thermoplastic polymer;
B. 0.1 to 2 wt% of the modifier component; and
C. optionally, > 0 to 3 wt% of carbon black; and
D. optionally, one or more additives.
wherein the weight percentages (wt%) are based upon the total weight of the composition.

4. The composition of claim 1, wherein the ethylene-based thermoplastic polymer comprises a mixture of the bimodal HDPE with at least one of a bimodal and/or unimodal polyethylene selected from the group consisting of HDPE, MDPE, LLDPE, and LDPE.

5. The composition of claim 1, wherein the ethylene-based thermoplastic polymer further comprises a unimodal HDPE or a mixture of a unimodal HDPE with at least one of a polyethylene selected from the group consisting of a second unimodal HDPE, a unimodal MDPE, unimodal LLDPE, and a unimodal LDPE.

6. The composition of Claim 1, wherein the modifier component is a polyethylene glycol (PEG) having a Mw of from 1,000 to 100,000.

7. The composition of claim 1, consisting essentially of a blend of the ethylene-based thermoplastic polymer, the modifier component, optionally carbon black, and optionally one or more additives.

8. The composition of claim 1, having a viscosity of at least 1% to up to 15% lower than said composition made without the modifier component.

9. A cable jacket on a fiber optical cable, the jacket made from the composition of claim 1.

10. A method of reducing excess fiber length in a cable jacket on a fiber optical cable, the method comprising extruding the composition of claim 1 onto the cable to form the jacket.

## Patentansprüche

1. Eine Zusammensetzung, die als eine Mischung Folgendes beinhaltet:
A. ein thermoplastisches Polymer auf Ethylenbasis, das ein bimodales Polyethylen hoher Dichte (HDPE, high density polyethylene) beinhaltet;
B. eine Modifikatorkomponente in einer Menge von 0,1 bis 2 Gew.-%, bezogen auf das Gesamtgewicht der Zusammensetzung, die wirksam ist, um die Schrumpfung der Zusammensetzung nach der Extrusion zu reduzieren, wobei die Modifikatorkomponente ausgewählt ist aus der Gruppe, bestehend aus Polyethylenglykol (PEG) mit einem Mw von 1 000 bis 100 000, Polypropylenglykol (PPG) mit einem Mw von 1 000 bis 100 000, Diethylenglykol (DEG), polarem Polyethylencopolymer und Kombinationen davon; und
C. optional Ruß; und
D. optional einen oder mehrere Zusatzstoffe.

2. Zusammensetzung gemäß Anspruch 1, als eine extrudierte Zusammensetzung, wobei die zyklische Temperaturschrumpfung der extrudierten Zusammensetzung (wie gemessen gemäß IEC 60811-503) mindestens 1 % geringer ist als die extrudierte Zusammensetzung, welche die gleiche Formulierung aufweist, aber ohne die Modifikatorkomponente hergestellt ist.

3. Zusammensetzung gemäß Anspruch1, die Folgendes beinhaltet:
A. zu 20 bis 99,9 Gew.-% das thermoplastische Polymer auf Ethylenbasis;
B. zu 0,1 bis 2 Gew.-% die Modifikatorkomponente; und
C. optional, zu > 0 bis 3 Gew.-% Ruß; und
D. optional, einen oder mehrere Zusatzstoffe,
wobei die Gewichtsprozentsätze (Gew.-%) auf das Gesamtgewicht der Zusammensetzung bezogen sind.

4. Zusammensetzung gemäß Anspruch 1, wobei das thermoplastische Polymer auf Ethylenbasis eine Mischung aus dem bimodalen HDPE mit mindestens einem aus einem bimodalen und/oder unimodalen Polyethylen, ausgewählt aus der Gruppe, bestehend aus HDPE, MDPE, LLDPE und LDPE, beinhaltet.

5. Zusammensetzung gemäß Anspruch 1, wobei das thermoplastische Polymer auf Ethylenbasis ferner ein unimodales HDPE oder eine Mischung aus einem unimodalen HDPE mit mindestens einem aus einem Polyethylen, ausgewählt aus der Gruppe, bestehend aus einem zweiten unimodalen HDPE, einem unimodalen MDPE, unimodalem LLDPE und einem unimodalen LDPE, beinhaltet.

6. Zusammensetzung gemäß Anspruch 1, wobei die Modifikatorkomponente ein Polyethylenglykol (PEG) mit einem Mw von 1 000 bis 100 000 ist.

7. Zusammensetzung gemäß Anspruch 1, die im Wesentlichen aus einer Mischung aus dem thermoplastischen Polymer auf Ethylenbasis, der Modifikatorkomponente, optional Ruß und optional einem oder mehreren Zusatzstoffen besteht.

8. Zusammensetzung gemäß Anspruch 1, die eine von mindestens 1 % bis bis zu 15 % niedrigere Viskosität aufweist als die ohne die Modifikatorkomponente hergestellte Zusammensetzung.

9. Eine Kabelbuchse auf einem Glasfaserkabel, wobei die Buchse aus der Zusammensetzung gemäß Anspruch 1 hergestellt ist.

10. Ein Verfahren zum Reduzieren überschüssiger Faserlänge in einer Kabelbuchse auf einem Glasfaserkabel, wobei das Verfahren das Extrudieren der Zusammensetzung gemäß Anspruch 1 auf das Kabel zum Bilden der Buchse beinhaltet.

## Revendications

1. Une composition comprenant, en tant que mélange homogène :
A. un polymère thermoplastique à base d'éthylène comprenant un polyéthylène haute densité (HDPE) bimodal ;
B. un constituant modificateur en une quantité allant de 0,1 à 2 % en poids rapporté au poids total de la composition, lequel est efficace pour réduire le retrait de la composition après extrusion, le constituant modificateur étant choisi dans le groupe constitué de polyéthylène glycol (PEG) ayant une Mw allant de 1 000 à 100 000, de polypropylène glycol (PPG) ayant une Mw allant de 1 000 à 100 000, de diéthylène glycol (DEG), de copolymère de polyéthylène polaire et de combinaisons de ceux-ci ;et
C. éventuellement, de noir de carbone ; et
D. éventuellement, d'un ou de plusieurs additifs.

2. La composition de la revendication 1, en tant que composition extrudée, dans laquelle le retrait thermique cyclique de la composition extrudée (mesuré conformément à l'IEC 60811-503) est d'au moins 1 % inférieur à ladite la composition extrudée ayant la même formulation mais fabriquée sans le constituant modificateur.

3. La composition de la revendication 1, comprenant :
A. de 20 à 99,9 % en poids du polymère thermoplastique à base d'éthylène ;
B. de 0,1 à 2 % en poids du constituant modificateur ; et
C. éventuellement, > 0 à 3 % en poids de noir de carbone ; et
D. éventuellement, un ou plusieurs additifs,
dans laquelle les pourcentages en poids (% en poids) sont rapportés au poids total de la composition.

4. La composition de la revendication 1, dans laquelle le polymère thermoplastique à base d'éthylène comprend un mélange du HDPE bimodal avec au moins un polyéthylène parmi un polyéthylène bimodal et/ou un polyéthylène unimodal choisis dans le groupe constitué de HDPE, MDPE, LLDPE, et LDPE.

5. La composition de la revendication 1, dans laquelle le polymère thermoplastique à base d'éthylène comprend en outre un HDPE unimodal ou un mélange d'un HDPE unimodal avec au moins un élément parmi un polyéthylène choisi dans le groupe constitué d'un deuxième HDPE unimodal, d'un MDPE unimodal, de LLDPE unimodal, et d'un LDPE unimodal.

6. La composition de la revendication 1, dans laquelle le constituant modificateur est un polyéthylène glycol (PEG) ayant une Mw allant de 1 000 à 100 000.

7. La composition de la revendication 1, constituée essentiellement d'un mélange homogène du polymère thermoplastique à base d'éthylène, du constituant modificateur, éventuellement de noir de carbone, et éventuellement d'un ou de plusieurs additifs.

8. La composition de la revendication 1, ayant une viscosité inférieure d'au moins 1 % à 15 % à celle de ladite la composition fabriquée sans le constituant modificateur.

9. Une gaine de câble sur un câble à fibre optique, la gaine étant fabriquée à partir de la composition de la revendication 1.

10. Un procédé de réduction de la longueur de fibre excédentaire dans une gaine de câble sur un câble à fibre optique, le procédé comprenant l'extrusion de la composition de la revendication 1 sur le câble pour former la gaine.
